# EUROPEAN PATENT APPLICATION

(11) **EP 2 905 678 A1**
(43) Date of publication of application: **12.08.2015**
(21) Application number: 14154129.2
(22) Date of filing: 06.02.2014
(51) Int. Cl.: G06F 3/01

(54) **Method and system for displaying content to a user**

(71) Applicant: Université catholique de Louvain, 1348 Louvain-la-Neuve (BE)
(72) Inventor: Frenay, David Jean-Marie Dominique, 5021 Boninne (BE); Hachez, David, 1970 Wezembeek-Oppem (BE)
(74) Representative: D'Halleweyn, Nele Veerle Trees Gertrudis

(57) **Abstract**

Method for displaying content to a user, comprising: recording facial image data of the user while a user is watching an image with content on a display device, which image with content is displayed by executing computer program instructions associated with a software application or a webpage in a web browser; analyzing the recorded facial image data and generating cognitive data based on said analyzing; using of said generated cognitive data by said computer program instructions in order to adapt the displayed image with content to the generated cognitive data.

## Description

### Field of Invention

The field of the invention relates to a method and device for displaying content to a user, a computer program comprising computer-executable instructions to perform one or more steps of the method, and a computer program product storing such a computer program.

### Background

A web site or a software application such as an app for a mobile device is often not suitable for giving all types of users a good user experience when browsing the web site or using the application. A website owner or app developer is bound to use a single design, content, promotion, etc. and cannot adapt the design in function of the user. More generally, machines do not adapt their behaviour to emotions, age, gender or behaviour of user (displacement, body language, prosody, etc.). Also retailers or marketers cannot adapt their behaviours, interactions, content, promotion or advertisement automatically in response to their customer actions whenever there are machines involved. For instance, a store manager cannot modify its store atmosphere and environment in response to behaviour, emotions, displacement, age or gender of their customers.

### Summary

Embodiments of the invention aim to provide a method, display device and computer program product that will give the user a better user experience when browsing a web site, when using a software application or more generally when watching an image with content on a display device.

According to a first aspect of the invention, there is provided a method for displaying content to a user. The method comprises recording facial image data of the user while a user is watching an image with content on a display device. The image with content is displayed by performing computer program instructions associated with a software application or a webpage in a web browser. The method further comprises analyzing the recorded facial image data, generating cognitive data based on said analyzing, and using said generated cognitive data by said computer program instructions in order to adapt the displayed image with content in function of the generated cognitive data.

Embodiments are based *inter alia* on the inventive insight that by analyzing facial image data of a user relevant cognitive data may be extracted and used for adjusting what information and/or how certain information is displayed to a user.

In the context of the present application the term "cognitive data" refers to data which characterizes an emotion, and/or a behavioural aspect, and/or a demographic aspect of the user. Cognitive data comprises any one of the following or a combination thereof: emotional data, behavioural data and demographic data.

In a preferred embodiment, the computer program instructions comprises programming code for selecting a piece of content from a plurality of pieces of content in function of cognitive data. Using the generated cognitive data in the computer program instructions may then comprise executing said programming code using said generated cognitive data to select a piece of content to be displayed in the image with content. Typically, the plurality of pieces of content will comprise pieces with a different shape, a different design, a different content, a different sound, etc. In that way, there may be selected a piece of content with a design, and/or shape and/or content that is adapted to the cognitive data of the user that is watching the display device, e.g. whilst browsing the webpage, or whilst using the software application.

In an exemplary embodiment, the image with content is displayed on the display device using computer program instructions including a plurality of references to URL's; and the using of the generated cognitive data in said computer program instructions comprises selecting a reference of said plurality of references in function of the generated cognitive data.

In another exemplary embodiment, the image with content is displayed on the display device using computer program instructions including a plurality of references to in-page content; and the using the generated cognitive data in said computer program instructions comprises selecting a reference of said plurality of references in function of the generated cognitive data.

In a preferred embodiment, the recording is done using a camera, e.g. a camera of the display device. This may be e.g. a camera integrated in a mobile device, a webcam, a security camera of a shop, etc. In other words, the display device may be a display apparatus with an integrated camera or the display device may comprise a camera and a screen as separate components that are communicating with each other.

The display device may be any type of display device, such as a mobile device e.g. a smart phone, a computer, a device comprising an advertising screen, a device capable of displaying the image with content on a car dashboard, a head-worn display such as a Google glass, etc.

In an exemplary embodiment, the method further comprises using the generated cognitive data to determine if input from the user is needed; triggering a user interaction modus if it is determined that input from the user is needed. During the user interaction modus questions may be asked to the user using audio and/or visual means, and a user may answer those questions via audio input (through an activated microphone), via textual input, via gestures (e.g. through an activated 3D sensor), etc. In a possible embodiment, the method comprises using the generated cognitive data to determine if textual input from the user is needed; and triggering the displaying of an input window if it is determined that textual input from the user is needed.

In a possible embodiment, the display device allows the user to point and/or click to/on parts of the displayed image with content; and the method comprises monitoring a pointer position associated with said pointing and/or clicking while the user is watching the image with content; using the monitored pointer position in said computer program instructions in order to adapt the displayed image with content in function of the monitored pointer position. The pointer position may be e.g. any one of the following: a mouse position, a finger position, a pointer pen position, a hand position, a position derived from a body gesture.

According to an exemplary embodiment, the analyzing of the recorded facial image data and the generating of cognitive data based on said analyzing comprises: sending the recorded facial image data from the display device to a remote server for performing an image analysis on said remote server; and receiving the cognitive data at the display device from the remote server. In that way, the analyzing software does not need to be installed locally, and a single remote server may serve multiple display devices, e.g. user devices.

According to another exemplary embodiment, the analyzing of the recorded facial image data and the generating cognitive data based on said analyzing comprises: performing pre-processing of the recorded facial image data at the display device in order to determine a face data set; sending the determined face data set to a remote server for further processing; and receiving the cognitive data at the display device from the remote server. Preferably, the face data set comprises a three-dimensional mesh characterizing the expression of the face in the recorded image data. In that way, the privacy can be guaranteed as only a non-recognisable 3D mesh is sent to the remote server and not the recorded image data itself.

In a further developed embodiment, the analyzing of the recorded facial image data and generating cognitive data based on said analyzing comprises: detecting and cropping a face image from the recorded facial image data; normalizing the face image; detecting a mesh of relevant facial points in the normalized face image; determining a set of parameters from the normalized face image and the mesh of relevant facial points; comparing said determined set of parameters with a database to generate the cognitive data. In a possible embodiment, the detecting and cropping, the normalizing and the detecting a mesh may be done locally; and the determining and the comparing may be done at a remote server. However, it is also possible to perform all steps locally at the display device, or to perform all steps remotely at the remote server.

In an embodiment of the invention, the recording of the facial image data may be performed via any one of the following steps: via programming code in the computer program instructions which controls a camera of the display device; via a web browser plug-in configured to control a camera of the display device; via a software application installed on the display device configured to control a camera of the display device.

According to another aspect of the invention, there is provided a computer program comprising computer-executable instructions to perform the method, when the program is run on a computer, of any one of the embodiments disclosed above.

According to a further aspect of the invention, there is provided a computer device or other hardware device programmed to perform one or more steps of any one of the embodiments of the method disclosed above. According to another aspect, there is provided a data storage device encoding a program in machine-readable and machine-executable form to perform one or more steps of any one of the embodiments of the method disclosed above.

According to yet another aspect of the invention, there is provided a display device comprising: recording means configured for recording facial image data of the user while a user is watching an image with content on a display device, which image with content is displayed by executing computer program instructions associated with a software application or a webpage in a web browser; a sending module configured for sending said recorded facial image data or data derived therefrom to an analyzing module; a receiving module configured for receiving cognitive data generated based on an analysis by the analyzing module of the recorded facial image data; a module configured for using the received cognitive data by the computer program instructions in order to adapt the displayed image with content to the received cognitive data. The analyzing module to which the data are sent may be either provided locally or remotely. Further, the using of the cognitive data may be performed according to any one of the possibilities disclosed above in connection with embodiments of the method.

In an exemplary embodiment, the display device may further comprise a pre-processing module configured for performing pre-processing of the recorded facial image data at the display device in order to determine a face data set; wherein the sending module is configured for sending the determined face data set to a remote server for further processing. The pre-processing may be performed as disclosed above in connection with an embodiment of the method.

### Brief description of the figures

The accompanying drawings are used to illustrate presently preferred non-limiting exemplary embodiments of devices of the present invention. The above and other advantages of the features and objects of the invention will become more apparent, and the invention will be better understood from the following detailed description when read in conjunction with the accompanying drawings, in which:
Figure 1 illustrates schematically a first embodiment of the invention;
Figure 2 illustrates schematically a more detailed second embodiment of the invention; and
Figures 3 and 4 illustrate flow chart of embodiments of the method of the invention.

### Description of embodiments

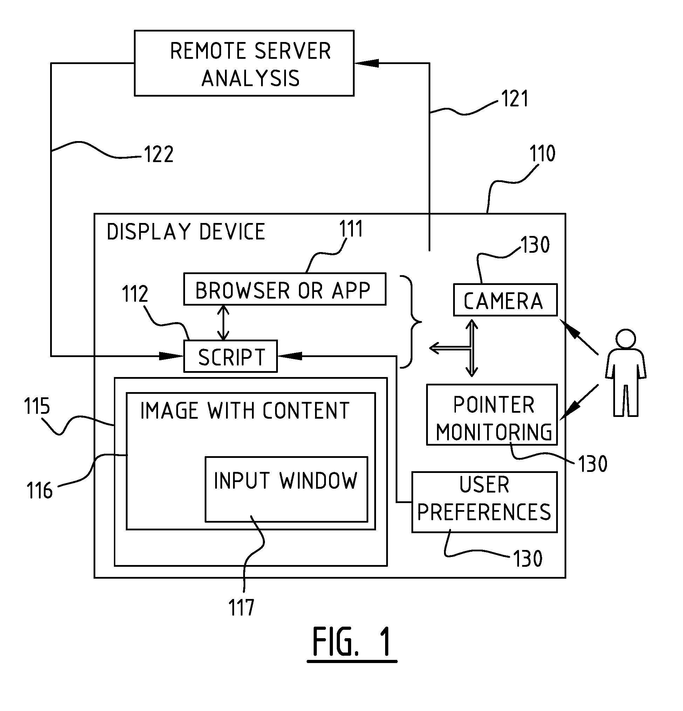

Figure 1 illustrates a first embodiment of a method of the invention which is performed partly at a display device 110 and partly at a remote server 120. An image with content is displayed by executing a script 112 with computer program instructions associated with a software application or a webpage in a web browser, see reference numeral 111. The method comprises recording facial image data of the user using a camera 130 while a user is watching the image with content 116 on a screen 115 of the display device 110. During the watching, the user may perform additional actions on the screen, which actions are typically common browsing actions or actions performed while using a software application. Typically, the display device 110 allows the user to point and/or click to/on parts of the displayed image with content 116, and the method further comprises monitoring a pointer position associated with said pointing and/or clicking while the user is watching the image with content, using a pointer monitoring module 113. Information about the mouse, the position thereof and the actions (clicks, mouse wheel) may be collected via known Javascript functions such as ".mousemove" or ".click". This pointer information may be sent, using e.g. websockets, to the remote server for further analysis.

The recorded facial image data may be analyzed either locally or at a remote server. In the embodiment of figure 1, it is assumed that the facial image data is sent to the remote server 120, and that the analysis is performed at the remote server 120, see arrow 121. The facial image data may be sent to the remote server e.g. in a jpeg format, optionally in encrypted form, optionally together with the pointer information.

When the pointer information is received at the server, this information (position, action) is stored in a file with a time stamp allowing the information to be correlated with e.g. the emotional data extracted from the facial image data. The cognitive data resulting from the analysis are stored via a POST request in a data base mysql, which may be located on another server for being accessible by software that is capable of generating reports using the stored data. The analysis is typically done real-time.

The resulting cognitive data is sent back from the remote server 120 to the display device, see arrow 122. The method further comprises using the generated cognitive data, the monitored pointer position data and optionally also user preferences 114 by the script 112 in order to adapt the displayed image with content 115 in function of the generated cognitive data and the monitored pointer position data.

The script 112 may comprise programming code for selecting a piece of content from a plurality of pieces of content in function of the generated cognitive data. The plurality of pieces of content comprises pieces with a different shape and/or design and/or text and/or picture. In an exemplary embodiment, the script 112 includes a plurality of references to URL's and/or a plurality of references to in-page content, which lead to a plurality of pieces of content with a different shape and/or design and/or text and/or picture(s). The generated cognitive data may then be used to select an appropriate reference of said plurality of references in function of the generated cognitive data.

The generated cognitive data may also be used by the script 112 to determine if input from the user is needed, and a user interaction modus may be triggered if it is determined that input from the user is needed. This may consist e.g. in triggering the displaying of an input window 117 if it is determined that textual input from the user is needed, or in activating a microphone or a 3D sensor for registering input of the user.

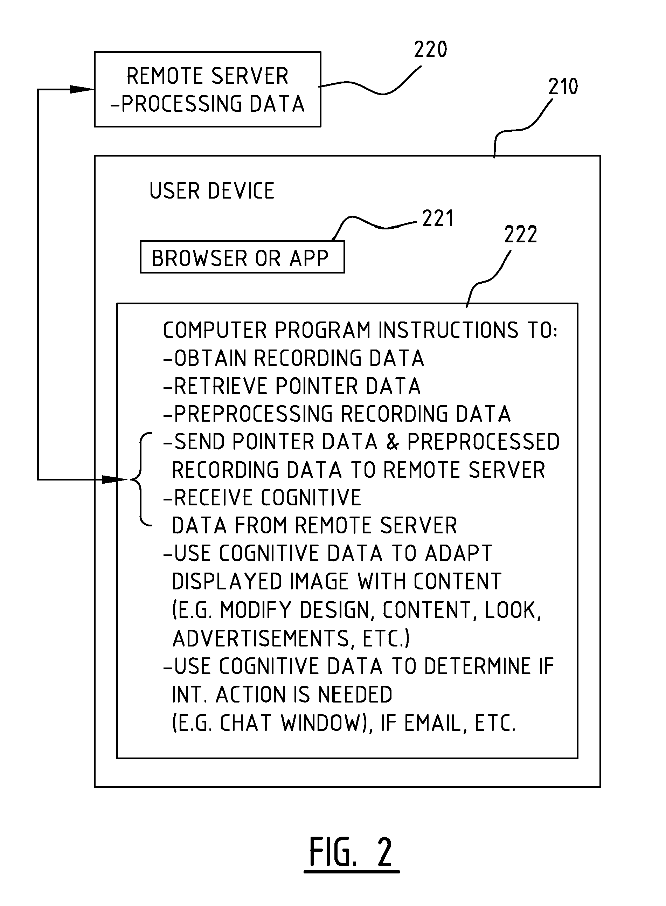

Figure 2 illustrates a second embodiment implementing the invention. In this embodiment, the display device is a user device 210 provided with a browser and/or software application 221 which is run with computer program instructions 222. The computer program instructions 222 typically comprise instructions for obtaining recorded facial image data, and for retrieving pointer position data. The computer program instructions 222 may control the camera of the display device. This may be done via a web browser plug-in configured to control the camera or via a software application installed on the display device configured to control the camera.

Optionally, the computer program instructions 222 may perform pre-processing of the recorded facial data. Pre-processing may e.g. consist in detecting and cropping at least one face image from the recorded facial image data; normalizing the face image; and detecting a mesh of relevant facial points in the normalized face image. A detailed example of possible pre-processing steps will be set out below in detail.

The computer program instructions 222 typically comprise instructions for sending the pre-processed facial image data and optionally also the pointer position data from the display device 210 to a remote server 220 for performing an image analysis on the remote server 220; and for receiving the cognitive data at the display device 210 from the remote server 220. The further processing that is performed at the remote server 220 may comprise determining a set of parameters from the normalized face image and the mesh of relevant facial points; and comparing said determined set of parameters with a database to generate the cognitive data.

Further, the computer program instructions 222 typically comprise instructions for using the received cognitive data to adapt the image displayed on the screen of the display device in function of the received cognitive data. This adaption may consist in an modification of the design, a modification of the advertisements that are included in the image, a modification of the text/picture content in the image, etc. Further, the cognitive data may be used to determine if an interaction modus is needed, e.g. by triggering a chat window, an email exchange, etc. with the user.

According to an embodiment of the method of the invention, facial image data of a user or client is recorded while a user is watching an image with content on a display device. The display device 110, 210 may be a user device such as a mobile phone, a PC, a tablet computer, etc., but could also be a public device, such as a public advertising screen, etc. The image is displayed by running a software application or a webpage in a web browser via computer program instructions e.g. in the form of a script. The facial data may be recorded using any type of camera such as a webcam, a mobile phone camera, a security camera, etc. The recorded video stream is captured by a detection software which may be either installed locally at the display device or remotely at a remote server 120, 220. The recorded facial image data is analyzed by the detection software and cognitive data is generated based on said analyzing. Now different types of analysis that may be performed and a possible architecture for running the detection software will be discussed.

### Facial Analysis

### People and Face Detection

Upon capturing the video stream, one or more faces visible in the image are detected and cropped. A common technique to perform face detection is the Viola-Jones algorithm, of which open-source implementations are known. The temporal component may be taken into account: after each face detection, the face can be tracked by faster techniques, such as Template Matching detection.

A pre-processing step may also be applied to separate still background and foreground of interest. The technique may use skin colour estimation, a mixture of Gaussian methods, etc.

Examples of such techniques can be found in the literature, see e.g. T. Bouwmans, F. El Baf, B. Vachon, "Background Modeling using Mixture of Gaussians for Foreground Detection - a Survey", Recent Patents on Computer Science 1, 3 (2008), 219-237.

### Pace pre-processing

To help analyze the face, it may be interesting to normalize the face. This can be done in two ways: by normalizing the face orientation or the illumination.

Normalizing illumination removes shadows and visual noise from the face picture. Algorithms mixing Gaussian filtering with image equalization, compression and applying a threshold have been proven to be efficient to accomplish illumination normalization.

Normalizing face orientation may be performed by detecting important points on the faces, e.g. corner of the mouth, eyes, chin, eyebrows, etc. Once those points are detected, the face image is projected on a 3D face model (or a simple sphere or cylinder) having the same position and orientation deduced by the information given by the important facial points. Then face is rotated and translated to give it a normalized position, as if the subject was facing the camera. To detect important facial points, several algorithms exist. An algorithm that may be used in embodiments of the invention is based on Active Appearance Model (AAM) techniques. The goal of the algorithm is to find deformation parameters to globally fit a mesh on a face (using rotation and translation parameters) and then to deform locally this mesh to adapt it to the facial deformation (using facial animation parameters).

In embodiments of the invention, there may be provided a database of faces with important facial points defined manually, to provide a ground-truth to the algorithm. For each patch of an image the probability of this patch being the neighbour of an important facial point may be computed. This probability may be computed with a linear classifier trained on the database and using several descriptions of patches. The algorithm then finds the local deformation parameters which have the highest global probability.

At the end of the process, global parameters regarding the orientation and the spatial position of the face are obtained, as well as a 3D mesh having the same expression as the face seen on the original image. These data are useful to normalize the face, but also to help identify a facial expression.

### Pace Analysis

Once the face orientation and illumination have been normalized, the face image can be processed to deduce useful information and reduce the dimensionality of data. Techniques that may be used in embodiments of the invention include Local Binary Pattern (LBP), Gabor Filters (GF), Local Phase Quantization (LPQ) and Pyramid Histogram of Orientation Gradient (PHOG). Temporal extensions of these methods are also implemented (LBP-TOP, LPQ-TOP, VLBP (Volume LBP)). In other words, in embodiments of the invention, this face analysis may take as an input a normalized gray-scale image and give as an output a vector composed of the LBP, GF, LPQ, PHOG analysis.

### Classification and Database

To accurately detect facial components such as facial expression, facial orientation, age or gender, etc., the algorithm may be trained via a database where those characteristics have been manually annotated. The steps described above may be repeated for each image of the database (face detection, face normalization, mesh detection, face analysis) and the resulting data can then be compared with the output parameters that are being learned. This learning may be done with a Support Vector Machine (SVM) classifier, or with decision trees, or with AdaBoost, etc. Once the algorithm is trained, it can be fed with new data issued from new face analysis and the algorithm will then be able to classify accurately those data into a category of emotion, orientation, age or gender. The parameters may be optimized with k-fold learning to obtain a further improved classification.

### Integration into web analytics and cloud based solution

Embodiments of the algorithm disclosed above may be integrated into a software as a service architecture. In a possible embodiment, a main part of the software may be installed on a server, accessible from any display device through the internet using Web Sockets. The goal of this main part of the software would be to analyze in real time a video stream from any of the display devices and to send the resulting cognitive data including emotional, and/or behavioural and/or demographic data, back to the display device.

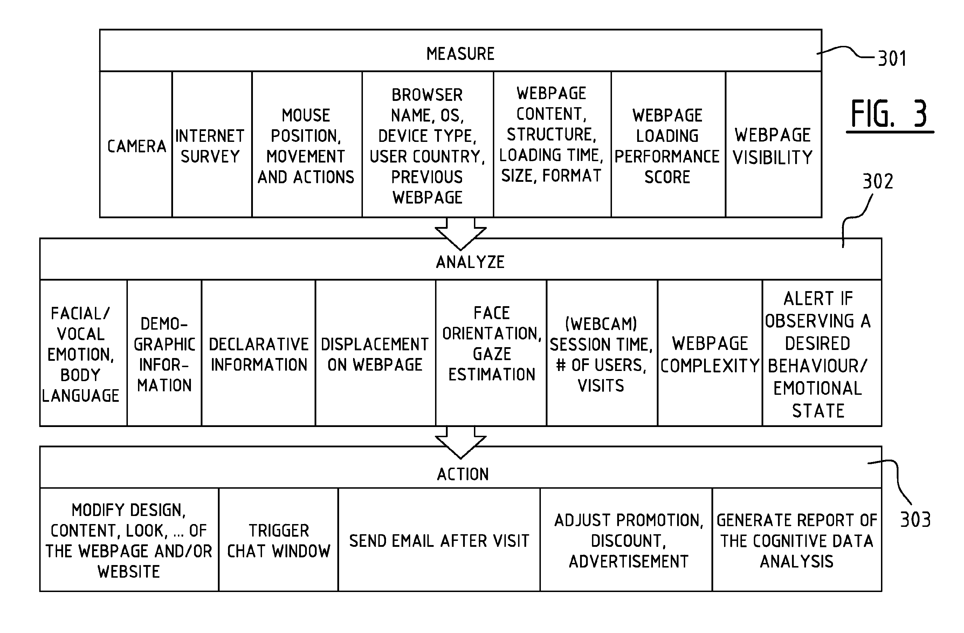

In a possible embodiment, a piece of code is installed on a website causing the video stream and possibly also other information to be analyzed (see e.g. figure 3, which will be discussed below) to be sent to the remote server. This can be achieved using Javascript and HTML5, or Flash. Alternatively, the video stream may be collected through a web browser plug-in or installed software.

In an embodiment of the invention, there may be generated a message for the user asking the user whether he agrees to webcam activation on the website to enable video analysis. If he does not agree, a survey could be presented to the user to collect declarative information. Also, this survey could be presented in combination with an activation of the webcam.

In another possible embodiment, a form of pre-processing is performed locally, and the pre-processed data is sent to the server. The pre-processed data may be e.g. a cropped face from the images, important facial points detected on the face, etc.

Figure 3 illustrates a detailed embodiment of such a method comprising a measuring step 301, an analyzing step 302 and an action step 303. The measuring step 301 may comprise any one or more of the following steps:
- collecting facial image data with a camera of the device;
- collecting an (optional) declarative internet survey;
- collecting information about mouse position, movement and actions (clicks, scroll, etc), etc.;
- collecting information about a WebBrowser name, the Desktop OS, the device Type (Mobile, Tablet, Desktop, ...), the user country of origin, the previous webpage, etc.;
- collecting information about the page content, webpage structure, webpage loading time, size, format, etc.;
- collecting a webpage loading performance score (YSLOW, Google Page Speed, etc.);
- collecting a webpage visibility (Woorank, social network visibility and positivity analysis, etc.);
- collecting information about webpage activities such as detecting whether a person has shared content on social media, whether a webpage has been added to the favourites of the user, whether a user has printed a webpage, etc.

The analyzing step 302 may comprise any one or more of the following steps:
- analyzing facial emotion (e.g. joy, sadness, surprise, disgust, anger, contempt, fear, etc.), vocal emotion and body language;
- analyzing the emotion duration;
- deriving demographic information: age, gender, ethnicity, etc.;
- analyzing declarative information (satisfaction, gender, age, etc.);
- analyzing displacement on the webpage (position, click or positivity heatmap)
- determining face orientation, performing gaze estimation;
- determining sessions duration, webcam session duration, number of (new) users, number of visits, etc.;
- analyzing the webpage complexity, e.g. visual complexity estimation using page content;
- producing an alert when a desired behaviour or emotional state is observed.

The action step 303 may comprise any one of the following steps which may be based on the results of the analyzing step 302:
- modifying design, content, look, etc of the current webpage and website;
- triggering a chat window;
- sending an email after the visit;
- adjusting promotions, discounts, advertisements;
- generating a report of the emotional and behavioural analysis of customers.

### Integration in a store or public environment

Embodiments of the invention can also be used in a store or in any public place. One could for instance install an iPad Kiosk (or any other tablet terminal) in a store to analyze customer behaviour by video. This dispositive could also be used to ask for further declarative feedback, asking questions as "how are you feeling today". One could also use an existent video device, such as security cameras, or install such cameras, and connect them to a display device such as an advertising screen according to embodiments of the invention. The displayed image on the screen may be adapted in function of the obtained cognitive data of people in the public space/store..

In such an environment, further/different techniques may be used in the algorithm described above. In an embodiment, the background may be removed, people may be detected using an algorithm such as the one described by Bill Triggs using Pyramid Histogram of Orientation Gradient (PHOG) and the people displacements may be analyzed. Such an analysis will further allow for the system to provide a heat map and a people count to the store owner/owner of the public place.

The technology may be integrated into the store to enable real time adaptation. The atmosphere, music, lighting or odours may be changed automatically according to the behaviour of the people in the public place. In the same way, promotion, advertising and discounts may be adapted to user emotional state and demographic classification. Also, signals may be send to vendors or managers when customers are showing a "buying" behaviour, a "confusion" behaviour while searching for a product, or an "irritation" behaviour, when there are queues at the checkout.

In an embodiment of the invention, the analysis software may be communicating with specific devices adapted for sending the cognitive data or for sending instructions or messages based on the cognitive data. In an embodiment, there may be provided a device for automatically sending an SMS to a store manager or a vender when their actions are required.

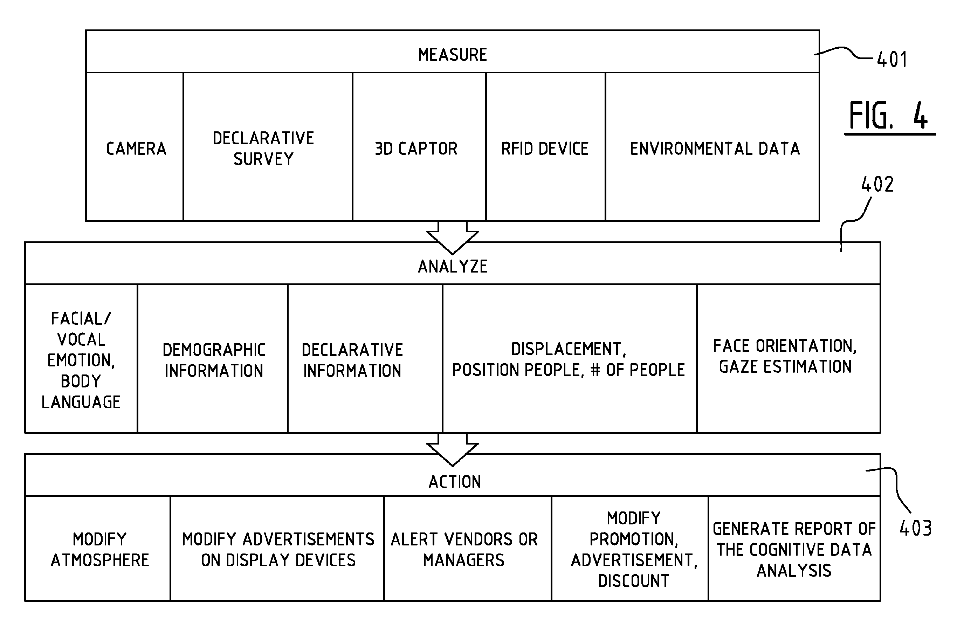

Figure 4 illustrates a detailed embodiment of such a method comprising a measuring step 401, an analyzing step 402 and an action step 403. The measuring step 401 may comprise any one or more of the following steps:
- collecting facial image data with a camera of the device, e.g. with a security camera, with an iPad or with tablet kiosk, etc.;
- collecting an (optional) declarative survey, e.g. via a tablet;
- collecting information sensed by a 3D captor;
- collecting information using an RFID device, or any other device capable of locating a person in a public place e.g. a store;
- collecting environmental data (weather, day, time, odour, lighting, temperature, etc.).

The analyzing step 402 may comprise any one or more of the following steps:
- analyzing facial emotion (e.g. joy, sadness, surprise, disgust, anger, contempt, fear, etc.), vocal emotion and body language;
- deriving demographic information: age, gender, ethnicity, etc.;
- analyzing declarative information (satisfaction, gender, age, etc.);
- analyzing the position and number of the persons in the public space/store;
- determining face orientation, performing gaze estimation;

The action step 403 may comprise any one of the following steps which may be based on the results of the analyzing step 402:
- modifying design, content, look, etc. of the displayed image, e.g. an advertisement;
- modifying atmosphere (lighting, temperature, music, odour, etc.);
- alerting vendors (using SMSes for instance) or managers of "buying" signals of a shopper, or of "confusion" signals, or of "irritation at checkout" signals, etc.;
- modifying a promotion, an advertisement, discounts, video tips, etc.;
- sending of an audio message with specific speakers;
- communicating through e.g. a device on the cart;
- generating a report of the emotional and behavioural analysis of customers.

### Advantages of embodiments

Embodiments of the invention address the problem that retailers or marketers cannot adapt their behaviour, interactions, content, promotion or advertisement automatically in response to their customer actions whenever there are machines involved. For instance, a store manager cannot modify its store atmosphere and environment or dispatch its sales force in response to behaviour, emotions, displacement, age or gender of their customers. Also, a website owner or app developer is not able to adapt its design, content, promotion, suggestion or ads to the behaviours, emotions, navigation history, age or gender of the user. More generally, machines do not adapt their behaviour to emotions, age, gender or behaviour of user (displacement, body language, prosody, etc.).

Embodiments of the invention enable people to analyze the behaviour of a user/client through a large spectrum of information. Embodiments of the invention work in real time and use cameras to adapt machines' reactions, or those of human working with a machine's help, to those observations.

Embodiment of the invention are based *inter alia* on automatic cognitive data detection software using a video stream, which software extracts a face from the video stream and analyzes it to send information back such as gender, age, emotion, face orientation or attention span. Detected emotions include joy, anger, sadness, disgust, fear, surprise, neutral, pain, etc. Face orientation and gaze direction may also be analyzed to evaluate attention span.

Embodiments of the invention correlate personal information to environment-based information. On a website, for instance, we could use complementary information such as: mouse and clicks stream, browser history and habits, geographical origin of users, etc. In a store, this complementary information could include store lighting intensity, temperature, odours, customer displacement and zone of interest, or even global weather, period of the day and economic statistics.

Embodiments of the invention may make, amongst others, the following situations possible:
- the content of a website, or its look and design, can be adapted to a user in function of its age, gender, mood or surf behaviour (browsing history, click stream, mouse position ...);
- improved interaction with a surfer by analyzing its behaviour:
   - a chat window can be shown if the person is upset, angry or does not find what he is looking for;
      an online survey may be triggered if a user fits a demographic or emotional profile based on information such as age, gender, emotions, behaviour, ...
      a specific promotion may be activated for a given demographic or emotional profile detected;
- in a store environment, among other things, luminosity, advertising, promotions, odours, temperature or music may be adjusted in response to specific characteristics and behaviour of customers, while keeping the customer anonymous.
- in a store, a signal may be sent to a sales person to indicate lost customers, or people having a leaving behaviour, or, on the contrary, to people willing to buy a product but needing help.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the figures, including any functional blocks labelled as "processors" or "modules" or "devices", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Whilst the principles of the invention have been set out above in connection with specific embodiments, it is to be understood that this description is merely made by way of example and not as a limitation of the scope of protection which is determined by the appended claims.

## Claims

1. Method for displaying content to a user, comprising:
recording facial image data of the user while a user is watching an image with content on a display device, which image with content is displayed by executing computer program instructions associated with a software application or a webpage in a web browser;
analyzing the recorded facial image data and generating cognitive data based on said analyzing;
using of said generated cognitive data by said computer program instructions in order to adapt the displayed image with content to the generated cognitive data.

2. The method of claim 1, wherein the cognitive data comprises any one of the following or a combination thereof: emotional data, behavioural data and demographic data.

3. The method of claim 1 or 2, wherein the computer program instructions comprise programming code for selecting a piece of content from a plurality of pieces of content in function of cognitive data; and wherein said using of the generated cognitive data in said computer program instructions comprises executing said programming code using said generated cognitive data to select the piece of content to be displayed in the image with content; wherein preferably said plurality of pieces of content comprises pieces with a different shape and/or design and/or text and/or picture.

4. The method of any one of the previous claims, wherein
the image with content is displayed on the display device using computer program instructions including a plurality of references to URL's and/or a plurality of references to in-page content; and wherein using the generated cognitive data in said computer program instructions comprises selecting a reference of said plurality of references in function of the generated cognitive data.

5. The method of any one of the previous claims, wherein the recording is done using a camera.

6. The method of any one of the previous claims, further comprising:
using the generated cognitive data to determine if input from the user is needed; triggering a user interaction modus if it is determined that input from the user is needed, such as triggering the displaying of an input window if it is determined that textual input from the user is needed.

7. The method of any one of the previous claims, wherein the display device allows the user to point and/or click to/on parts of the displayed image with content; and the method further comprises:
monitoring a pointer position associated with said pointing and/or clicking while the user is watching the image with content;
using the monitored pointer position in said computer program instructions in order to adapt the displayed image with content in function of the monitored pointer position.

8. The method of any one of the previous claims, wherein said analyzing of the recorded facial image data and generating cognitive data based on said analyzing comprises:
sending the recorded facial image data from the display device to a remote server for performing an image analysis on said remote server; and
receiving the cognitive data at the display device from the remote server.

9. The method of any one of the claims 1-7, wherein the analyzing of the recorded facial image data and generating cognitive data based on said analyzing comprises:
performing pre-processing of the recorded facial image data at the display device in order to determine a face data set;
sending the determined face data set to a remote server for further processing; and
receiving the cognitive data at the display device from the remote server.

10. The method of any one of the previous claims, wherein the analyzing of the recorded facial image data and generating cognitive data based on said analyzing comprises:
detecting and cropping a face image from the recorded facial image data;
normalizing the face image;
detecting a mesh of relevant facial points in the normalized face image;
determining a set of parameters from the normalized face image and the mesh of relevant facial points;
comparing said determined set of parameters with a database to generate the cognitive data.

11. The method of claim 9 and 10, wherein the pre-processing comprises the detecting and cropping, the normalizing and the detecting a mesh; and the further processing comprises the determining and the comparing.

12. The method of any one of the previous claims, wherein the recording facial image data is performed via any one of the following steps:
- via programming code in the computer program instructions which controls a camera of the display device;
- via a web browser plug-in configured to control a camera of the display device;
- via a software application installed on the display device configured to control a camera of the display device.

13. A computer program comprising computer-executable instructions to perform any one of the steps of the method, when the program is run on a computer, of any one of the claims 1-12.

14. Display device comprising:
recording means configured for recording facial image data of the user while a user is watching an image with content on a display device, which image with content is displayed by executing computer program instructions associated with a software application or a webpage in a web browser;
a sending module configured for sending said recorded facial image data or data derived therefrom to an analyzing module;
a receiving module configured for receiving cognitive data generated based on an analysis by the analyzing module of the recorded facial image data;
a module configured for using the received cognitive data by the computer program instructions in order to adapt the displayed image with content to the received cognitive data.

15. The display device of claim 14 further comprising a pre-processing module configured for performing pre-processing of the recorded facial image data at the display device in order to determine a face data set; wherein the sending module is configured for sending the determined face data set to a remote server for further processing.
